(19) Europäisches Patentamt
European Patent Office
Office européen des brevets

(11) **EP 2 461 016 A1**

(12) **EUROPÄISCHE PATENTANMELDUNG**

(43) Veröffentlichungstag:
**06.06.2012  Patentblatt 2012/23**

(51) Int Cl.:
*F03B 13/06* (2006.01)  *F03B 13/08* (2006.01)
*F03B 17/06* (2006.01)  *F03B 11/02* (2006.01)

(21) Anmeldenummer: **10193701.9**

(22) Anmeldetag: **03.12.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Rehart GmbH**
**91725 Ehingen (DE)**

(72) Erfinder:
• **Habermann, Christian**
  **91596 Burk (DE)**
• **Zeiler, Georg**
  **91469 Hagenbüchach (DE)**

(74) Vertreter: **Nunnenkamp, Jörg**
**Andrejewski - Honke**
**Patent- und Rechtsanwälte**
**An der Reichsbank 8**
**45127 Essen (DE)**

(54) **Wasserkraftanlage**

(57)    Gegenstand der vorliegenden Erfindung ist eine Wasserkraftanlage zum Erzeugen elektrischer Energie durch Umwandlung von Strömungsenergie eines strömenden Gewässers. Die betreffende Wasserkraftanlage ist mit wenigstens einer in einem Trog (3) aufgenommenen Rotoreinheit (4), und mit einem von der Rotoreinheit (4) angetriebenen Generator (5) ausgerüstet. Erfindungsgemäß weist der Trog (3) an seinem auslaufseitigen Ende ein Reduzierelement (8) zur Verringerung des Ausströmquerschnittes auf.

Fig.2

## Beschreibung

Die Erfindung betrifft eine Wasserkraftanlage zum Erzeugen elektrischer Energie durch Umwandlung von Strömungsenergie eines strömenden Gewässers, mit wenigstens einer in einem Trog aufgenommenen Rotoreinheit, und mit einem von der Rotoreinheit angetriebenen Generator.

Solche Wasserkraftanlagen zum Erzeugen elektrischer Energie sind in vielfältiger Art und Weise bekannt, wozu nur beispielhaft auf die EP 1 930 597 A2 verwiesen sei. Dort wird eine von dem archimedischen Prinzip Gebrauch machende archimedische Schraube als Rotoreinheit beschrieben. Das gilt auch für die ebenfalls gattungsbildende DE 41 39 134 A2.

Vergleichbare Wasserkraftanlagen ohne archimedische Schraube dafür mit einer propellerartigen Rotoreinheit werden in der US 4 868 408 vorgestellt. Bei der bekannten und vorerwähnten Wasserkraftanlage wird mit einem gegenüber einem Einlaufquerschnitt vergrößerten Auslaufquerschnitt mit divergierendem Winkel zugehöriger Wände gearbeitet. Tatsächlich beträgt der Auslaufdurchmesser mehr als das 1,5-fache des Einlaufdurchmessers, um einen Venturi-Effekt zu erzeugen. Daraus resultiert eine komplexe Gehäuseform, die sich mit einer längserstreckten archimedischen Schraube nicht oder kaum kombinieren lässt.

Tatsächlich kommen bei Wasserkraftanlagen mit archimedischen Schrauben überwiegend zylindrische Tröge zum Einsatz. Das machen die beiden erstgenannten Schriften EP 1 930 597 A12 und auch die DE 41 39 134 A1 deutlich. Bei solchen Wasserkraftanlagen mit im Innern des Troges befindlicher und als archimedische Schraube ausgeführte Rotoreinheit besteht ein Problem dahingehend, dass auslaufseitig des Troges oftmals turbulente Strömungen auftreten, was u. a. zu störenden Geräuschemissionen führt. Außerdem besteht die Gefahr, dass in das auslaufseitige Ende des Troges Wasser zurückströmt oder zurückströmen kann. Diese sämtlichen beobachteten Phänomene vermindern nicht nur die Akzeptanz für solche Wasserkraftanlagen, die üblicherweise in strömenden öffentlichen Gewässern wie Flüssen betrieben werden, sondern beeinflussen auch den erreichbaren Wirkungsgrad negativ. Hier will die Erfindung insgesamt Abhilfe schaffen.

Der Erfindung liegt das technische Problem zugrunde, eine derartige Wasserkraftanlage so weiter zu entwickeln, dass ein verbessertes Strömungsverhalten bei zugleich optimiertem Geräuschverhalten und gesteigertem Wirkungsgrad beobachtet wird.

Zur Lösung dieser technischen Problemstellung ist eine gattungsgemäße Wasserkraftanlage im Rahmen der Erfindung dadurch gekennzeichnet, dass der Trog an seinem auslaufseitigen Ende ein Reduzierelement zur Verringerung des Ausströmquerschnittes aufweist.

Im Rahmen der Erfindung wird der Trog also mit einem Zusatzelement ausgerüstet, nämlich dem Reduzierelement. Dieses ist an seinem auslaufseitigen Ende vorgesehen. Da der Trog meistens unter einem bestimmten Aufstellwinkel zwischen einem Oberwasserspiegel und einem Unterwasserspiegel des strömenden Gewässers gelagert ist bzw. aufgestellt wird, findet sich das auslaufseitige Ende des Troges im Bereich des Unterwasserspiegels. An diesem auslaufseitigen Ende ist das erfindungsgemäße Reduzierelement vorgesehen, mit dessen Hilfe der Ausströmquerschnitt verringert wird.

Üblicherweise verfügt der Trog über eine zylindrische Gestalt und folglich einen gleichbleibenden Trogquerschnitt und mag offen oder geschlossen gestaltet sein. Ohne zusätzliches und erfindungsgemäß eingesetztes Reduzierelement entspricht der Trogquerschnitt dem Ausströmquerschnitt, also dem Querschnitt, der dem durch den Trog strömenden Wasser insgesamt beim Ausströmen zur Verfügung steht. Dieser Ausströmquerschnitt wird im Rahmen der Erfindung durch das am auslaufseitigen Ende des Troges vorgesehene Reduzierelement verringert. D. h., der Ausströmquerschnitt am Ende des Reduzierelementes ist kleiner als der Trogquerschnitt gestaltet. Meistens werden an dieser Stelle Querschnittsverringerungen vom Trogquerschnitt zum Ausströmquerschnitt am auslaufseitigen Ende des Reduzierelementes von wenigstens 10 % oder mehr beobachtet. D. h., das durch den Trog strömende Wasser passiert einen Querschnitt, welcher sich vom Trogquerschnitt im Innern des Troges bis zum Ausströmquerschnitt am auslaufseitigen Ende des Reduzierelementes um wenigstens 10 % verringert.

Um dies im Detail zu erreichen, ist das Reduzierelement im Allgemeinen als an den Trog angeschlossenes Ringelement ausgebildet. Dabei kann das Reduzierelement als geschlossenes oder geöffnetes Ringelement, beispielsweise als Vollringelement, Halbringelement, Dreiviertelringelement etc. ausgelegt werden. D. h., die Erfindung umfasst als Ringelement ausgebildete Reduzierelemente, die insgesamt geschlossen oder offen ausgebildet sind und lediglich einen bestimmten Bogenwinkel überstreichen. In letztgenanntem Fall mag es sich um ein Halbringelement, ein Dreiviertelringelement etc. handeln. Dadurch kann den einzelnen Füllgraden im Innern des Troges unschwer Rechnung getragen werden. Tatsächlich ist die im Innern des Troges angeordnete und hierin gelagerte Rotoreinheit regelmäßig als archimedische Schraube (Schnecke) ausgelegt. Durch diese archimedische Schraube werden im Innern des Troges einzelne Schraubengänge bzw. Schneckengänge definiert. Die Schraubengänge sind je nach Auslegung und Anbringung des Troges zu einem bestimmten Grad mit Wasser gefüllt. Man spricht in diesem Zusammenhang von den Gangfüllungen.

Typischerweise fließt Wasser vom Oberwasserspiegel durch den Trog zum Unterwasserspiegel. Dabei werden die einzelnen Schneckengänge bzw. Schraubengänge unter Berücksichtigung der Gangfüllungen mit Wasser gefüllt und die Gangfüllungen gleiten unter Einwirkung der Schwerkraft im Trog abwärts. Dabei wird die gewünschte Schubkraft auf die einzelnen Schneckengänge ausgeübt und die archimedische Schnecke in Drehungen versetzt. Die Drehung ihrerseits treibt den Generator an. Das an der archimedischen Schraube zur Verfügung stehende Drehmoment für den Antrieb des Generators hängt vom Gewicht der Gangfüllung ab, so dass man im Allgemeinen bestrebt ist, die einzelnen Schneckengänge vollständig mit Wasser zu füllen.

Da die Wasserkraftanlagen typischerweise in natürlichen Gewässern eingesetzt werden, lässt sich dies nur bedingt realisieren, weil der Oberwasserspiegel und folglich auch der Unterwasserspiegel beispielsweise jahreszeitlich bedingten Schwankungen unterworfen sind. Jedenfalls wird man beispielsweise je nach maximaler Gangfüllung das Reduzierelement entsprechend als geschlossenes oder geöffnetes Ringelement auslegen. D. h., der vom durch den Trog strömenden Wasser genutzte (maximale) Trogquerschnitt gibt die Größe des Reduzierelementes vor. Wird von dem strömenden Wasser der gesamte Trogquerschnitt genutzt, so wird man typischerweise mit einem als geschlossenes Ringelement ausgeführten Reduzierelement arbeiten. Nutzt dagegen das durchströmende Wasser lediglich die Hälfte des Trogquerschnittes, so kann mit einem als Halbringelement ausgelegten Reduzierelement gearbeitet werden.

Im Detail verfügt das Reduzierelement über zwei unterschiedliche Querschnitte, nämlich einen Einlaufquerschnitt und einen demgegenüber verringerten Auslaufquerschnitt. Der Einlaufquerschnitt ist an den endseitigen Trogquerschnitt angepasst. D. h., das Reduzierelement verfügt trogseitig über den an den endseitigen Trogquerschnitt angepassten Einlaufquerschnitt. Dieser Einlaufquerschnitt geht in axialer Richtung des Reduzierelements bzw. in Fließrichtung des Wassers in den auslaufseitig gegenüber dem Einlaufquerschnitt verringerten Auslaufquerschnitt über. In diesem Zusammenhang wird meistens mit einer übereinstimmenden Querschnittsform für das Reduzierelement und den Trog gearbeitet. Hier haben sich aus Gründen einer einfachen Fertigung jeweils Kreisquerschnitte mit übereinstimmender Mittelpunktachse bewährt.

Weiter haben sich Ausführungsformen als besonders günstig erwiesen, bei welchen der Auslaufquerschnitt des Reduzierelementes in etwa 10 % bis 50 % kleiner als der bzw. sein Einlaufquerschnitt ausgebildet ist. Im Maximum reduziert sich der Auslaufquerschnitt also auf in etwa die Hälfte im Vergleich zum Einlaufquerschnitt. Ganz besonders bevorzugt ist eine Variante, bei welcher der Auslaufquerschnitt um 20 % bis 40 % kleiner als der Einlaufquerschnitt und bezogen auf diesen ausgebildet ist.

Außerdem hat es sich bewährt, wenn das Reduzierelement eine axiale Länge aufweist, welche maximal die Hälfte eines Trogdurchmessers beträgt. D. h., das Reduzierelement und die damit verbundene Verringerung des Ausströmquerschnittes findet typischerweise auf einer Strecke statt, welche weniger als die Hälfte des Trogdurchmessers von ihrer Länge her beträgt. Ganz besonders bevorzugt ist eine axiale Länge des Reduzierelementes, welche das 0,1- bis 0,3-fache des fraglichen Durchmessers bemisst.

Im Allgemeinen ist der Trog zylindrisch ausgeführt. Dies deshalb, weil sich eine solche Zylinderform besonders einfach und kostengünstig herstellen lässt. Außerdem trägt die Zylinderform des Troges dem Umstand Rechnung, dass die im Innern des Troges aufgenommene und meistens dort gelagerte Rotoreinheit im Allgemeinen als archimedische Schraube ausgeführt ist, welche mit ihren einzelnen Schraubengängen bzw. Schneckengängen ohnehin einen einhüllenden Zylindermantel definiert. Gegenüber dem zylindrisch ausgeführten Trog ist demgegenüber das Reduzierelement vorteilhaft konisch ausgelegt. Dabei wird typischerweise mit einem Konuswinkel im Bereich von 10° bis 40° gearbeitet. Insbesondere haben sich Konuswinkel von 10° bis 30° und vorzugsweise solche im Bereich von ca. 20° als besonders günstig erwiesen.

Aus Gründen einer einfachen und kostengünstigen Fertigung ist das Reduzierelement im Allgemeinen mehrteilig aufgebaut. Dabei mag sich das Reduzierelement aus einzelnen Reduzierelementbestandteilen zusammensetzen. Diese Reduzierelementbestandteile können als jeweilige Konusbögen ausgelegt sein und zusammengenommen das konisch ausgelegte Reduzierelement bilden und definieren.

Das Reduzierelement verfügt im Allgemeinen über wenigstens einen Anschlussflansch. Mit Hilfe dieses Anschlussflansches wird das Reduzierelement typischerweise durch Befestigungsmittel mit dem Trog verbunden, und zwar an seinem auslaufseitigen Ende. Zu diesem Zweck verfügt das Reduzierelement über den fraglichen Anschlussflansch trogseitig, d. h. an seinem dem auslaufseitigen Ende des Troges zugewandten Ende. Auch das gegenüberliegende trogabseitige Ende des Reduzierelementes kann mit einem Anschlussflansch ausgerüstet werden. Das empfiehlt sich besonders für den Fall, dass das Reduzierelement im Bereich einer Tragkonsole angeordnet wird. Mit Hilfe dieser Tragkonsole lässt sich eine untere Lagerung der Wasserkraftanlage realisieren. An dieser Tragkonsole kann das Reduzierelement bei Bedarf festgelegt werden. Hierzu mag der trogabseitige Anschlussflansch dienen.

Im Allgemeinen wird der Trog unter einem bestimmten Aufstellwinkel zwischen dem Oberwasserspiegel und dem Unterwasserspiegel eines strömenden Gewässers angeordnet bzw. gelagert. In diesem Zusammenhang hat es sich bewährt, wenn der zugehörige Aufstellwinkel des Troges variiert werden kann. D. h., der Trog ist unter Einstellung eines variierenden Aufstellwinkels schwenkbar zwischen dem Oberwasserspiegel und dem Unterwasserspiegel gelagert. Dadurch kann verschiedenen Wasserständen relativ problemlos Rechnung getragen werden.

Außerdem hat es sich bewährt, wenn das Reduzierelement ganz oder teilweise unterhalb des Unterwasserspiegels angeordnet ist. D. h., die erfindungsgemäß vorgenommene Auslaufreduzierung erfolgt meistens im Unterwasserbereich, d. h. unterhalb des Unterwasserspiegels. Dabei kann das Reduzierelement vorteilhaft aus Blech hergestellt werden, wobei sich insbesondere Stahlblech, beispielsweise feuerverzinktes Stahlblech oder solches aus nicht rostendem Stahl als besonders günstig erwiesen hat.

Im Ergebnis wird eine Wasserkraftanlage zur Verfügung gestellt, die über einen reduzierten Auslaufdurchmesser verfügt, was zunächst einmal überraschend ist, weil man üblicherweise von einem erweiterten Auslaufdurchmesser ausgehen würde um den Durchsatz zu erhöhen. Entsprechendes zeigt die US 4 868 408 und auch die DE 41 39 134 A1 (vgl. die Fig. 1 und 2). Dennoch überwiegen die Vorteile wie nachfolgend noch näher erläutert wird. Dabei wird der betreffende Auslaufdurchmesser durch das am auslaufseitigen Ende des Troges vorgesehene Reduzierelement zur Verfügung gestellt. Tatsächlich sorgt das Reduzierelement für eine Verringerung des Ausströmquerschnittes.

Auf diese Weise wird zunächst einmal ein verbessertes Ausströmen des Wassers aus dem Trog respektive dem endseitigen Reduzierelement zur Verfügung gestellt. Denn das fragliche Reduzierelement verhindert bzw. verringert die Entstehung von turbulenten Strömungen in diesem Bereich. Dadurch werden auch die Strömungsverhältnisse im Innern des Troges verbessert und als Folge hiervon kann der Wirkungsgrad gesteigert werden. Das alles gelingt, obwohl die Austrittsgeschwindigkeit des Wassers oder allgemein des Mediums im Beispielfall eine Reduktion erfährt.

Denn als Folge der verringerten Austrittsgeschwindigkeit und der verbesserten Strömungsverhältnisse werden die einzelnen Schneckengänge der archimedischen Schraube im Vergleich zu einer Wasserkraftanlage ohne Reduzierelement mehr und gleichmäßiger gefüllt. Das Gewicht der einzelnen Gangfüllungen steigt also tendenziell an und damit auch das von der archimedischen Schraube auf den Generator übertragene Drehmoment und folglich der Wirkungsgrad.

In die gleiche Richtung wirken Maßnahmen der Erfindung, wonach der Austrittsquerschnitt des durch die Wasserkraftanlage strömenden Wassers infolge der verringerten Austrittsgeschwindigkeit eine Vergrößerung erfährt. D. h., der vom Wasser tatsächlich genutzte Anteil des insgesamt zur Verfügung stehenden Ausströmquerschnittes steigt an. Als weitere Folge hiervon werden Ausströmverluste reduziert und der Wirkungsgrad erneut erhöht. Gleichzeitig werden etwaige Geräuschemissionen minimiert und durch die gleichmäßigere Ausströmung werden Ablagerungen vermieden.

Hinzu kommt, dass ausgangsseitig des Reduzierelementes durch die an dieser Stelle verringerten turbulenten Strömungen beispielsweise keine Rückströmung in vorzeitig entleerte Schneckengänge mehr erfolgen kann. Vielmehr bedingt die reduzierte Austrittsgeschwindigkeit des Wassers eine durchgängig gleiche und mehr oder minder konstante Gangfüllung bzw. Füllung der einzelnen Schneckengänge. Hierdurch besteht auch nicht die Gefahr, dass rückströmendes Wasser eventuell seitlich durch die archimedische Schraube wieder ausgedrückt wird.

Schließlich bedingt der insgesamt gleichmäßigere Lauf der archimedischen Schraube im Vergleich zu einer Wasserkraftanlage ohne Reduzierelement, dass niederfrequente Pumpgeräusche insbesondere bei erhöhtem Unterwasserspiegel vermieden werden. Folglich sind Beeinträchtigungen des Fischbestandes nicht zu erwarten. Hierzu trägt ergänzend der Umstand bei, dass Vibrationen vermindert sind und folglich auch die dynamische Belastung der erforderlichen Lager zur Halterung des Troges reduziert wird. In Verbindung mit den ebenfalls verminderten Lastwechseln stellt sich dadurch zusammenfassend eine längere Lagerlebensdauer für die Lager ein. Hierin sind die wesentlichen Vorteile zu sehen.

Im Folgenden wird die Erfindung anhand einer lediglich ein Ausführungsbeispiel darstellenden Zeichnung näher erläutert; es zeigen:

Fig. 1    eine erfindungsgemäße Wasserkraftanlage schematisch in perspektivischer Darstellung,

Fig. 2    den Gegenstand nach Fig. 1 in Seitenansicht, teilweise im Schnitt,

Fig. 3    ein Detail der Wasserkraftanlage nach den Fig. 1 und 2 im Bereich des Reduzierelementes und

Fig. 4    eine abgewandelte Ausführungsform nach der Fig. 3.

In den Figuren ist eine Wasserkraftanlage dargestellt, die zum Erzeugen elektrischer Energie durch Umwandlung von Strömungsenergie eines strömenden Gewässers dient. Bei dem Gewässer handelt es sich vorliegend um einen Fluss, welcher an einem Wehr oder allgemein an einer Stufe angestaut wird. Folgerichtung beobachtet man einen Oberwasserspiegel 1 und einen Unterwasserspiegel 2. Die Wasserkraftanlage verfügt in ihrem grundsätzlichen Aufbau über einen Trog 3, welcher eine Rotoreinheit 4 ganz oder teilweise umschließt, die in seinem Innern rotiert. Bei der Rotoreinheit 4 handelt es sich um einen Schneckenkörper 4 mit einzelnen Schneckengängen, folglich eine archimedische Schraube oder Schnecke. Die Schneckengänge verfügen über Gangfüllungen an Wasser, die dadurch entstehen, dass das Wasser des Flusses vom Oberwasserspiegel 1 ausgehend über das obere Ende in den Trog 3 einströmt und den Trog 3 am unteren Ende bzw. im unteren Bereich des Unterwasserspiegels 2 wieder verlässt. Das Wasser füllt die einzelnen Schneckengänge und gleitet unter Einwirkung der Schwerkraft im Trog 3 abwärts. Dabei wird eine Schubkraft auf die einzelnen Schneckengänge ausgeübt, welche den Schneckenkörper 4 bzw. die archimedische Schraube in Drehungen versetzt.

Da der Schneckenkörper 4 im dargestellten Beispielfall achsgleich mit einem Generator 5 zusammenwirkt bzw. der Generator 5 achsgleich an den Schneckenkörper 4 angeschlossen ist, folgt der Generator 5 den Drehungen des Schneckenkörpers 4 und erzeugt auf diese Weise ausgangsseitig die gewünschte elektrische Energie. Diese ist umso größer, je mehr die einzelnen Gangfüllungen mit Wasser gefüllt sind, wie dies einleitend bereits beschrieben wurde.

Die gesamte Rotoreinheit bzw. der Trog 3 inklusive des im Innern rotierenden Schneckenkörpers 4 ist unter einem bestimmten Aufstellwinkel $\alpha$ zwischen dem Oberwasserspiegel 1 und dem Unterwasserspiegel 2 gelagert. Dabei mag der Aufstellwinkel $\alpha$ variieren, weil der Trog 3 schwenkbar zwischen dem Oberwasserspiegel 1 und dem Unterwasserspiegel 2 gelagert ist. Hierzu steht ein Schwenklager 6 in Verbindung mit einer Basis 7 zur Verfügung. Das ist allerdings nur beispielhaft zu verstehen und keine zwingende Voraussetzung für die Erfindung.

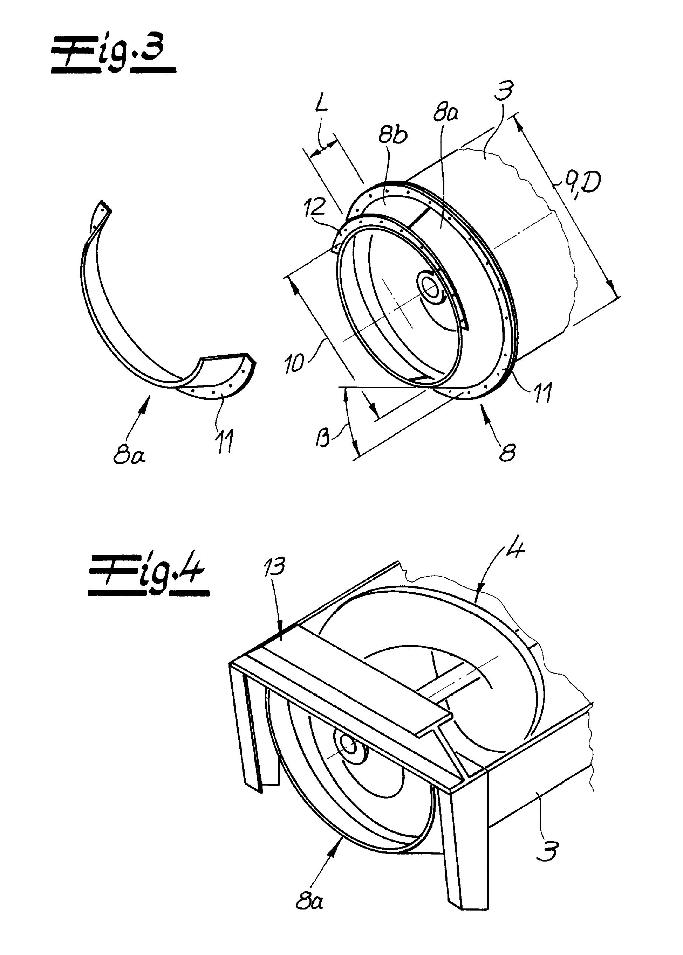

Denn hierfür ist wesentlich, dass der Trog 3 an seinem auslaufseitigen Ende mit einem Reduzierelement 8 ausgerüstet ist, welches im Detail in den Fig. 3 und 4 dargestellt wird. Mit Hilfe des Reduzierelementes 8 wird der Ausströmquerschnitt der Wasserkraftanlage im Ganzen verringert.

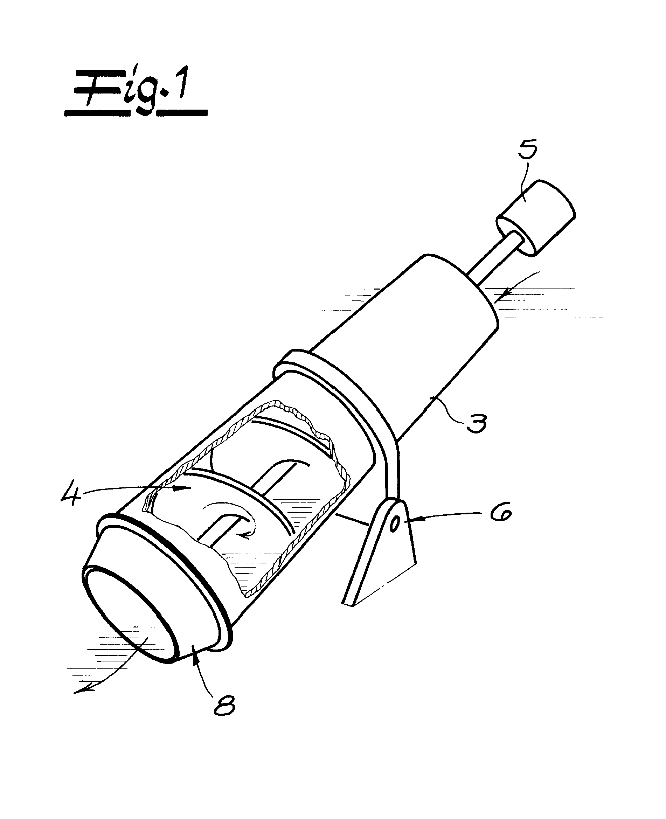

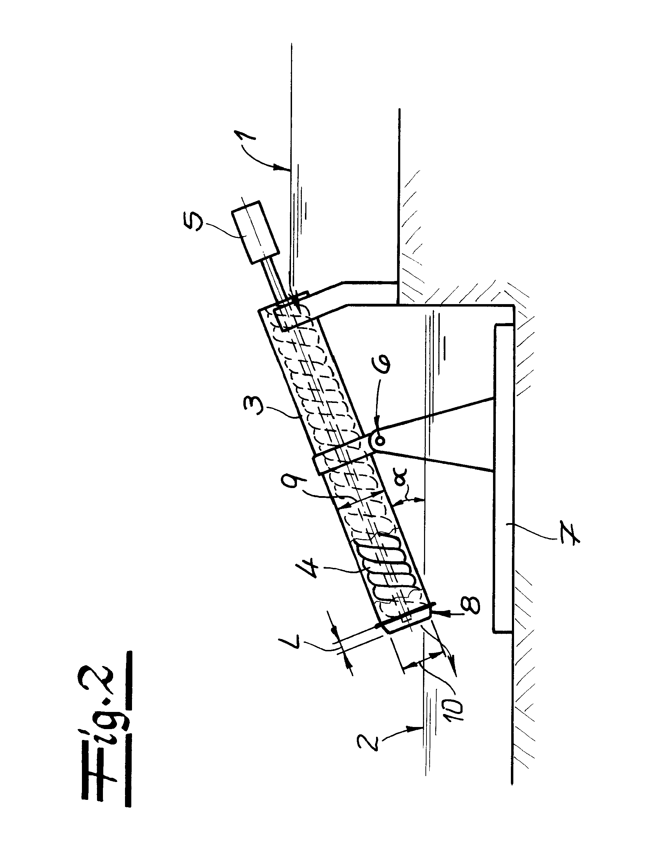

Tatsächlich ist der Trog 3 im gezeigten Beispiel zylindrisch und geschlossen (vgl. Fig. 1 bis 3) oder auch offen (vgl. Fig. 4) ausgelegt und verfügt demzufolge über einen kreisförmigen und in der Schnittdarstellung gemäß Fig. 2 angedeuteten Trogquerschnitt 9. Dieser Trogquerschnitt 9 bzw. der dem Wasser zur Verfügung stehende Ausströmquerschnitt wird durch das Reduzierelement 8 verringert. Tatsächlich passiert nämlich das vom Oberwasserspiegel 1 durch den Trog 3 hindurchfließende und am Unterwasserspiegel 2 ausströmende Wasser am auslaufseitigen Ende des Reduzierelementes 8 einen Auslaufquerschnitt 10, welcher im Vergleich zum Trogquerschnitt 9 um ca. 10 bis 40 % reduziert ist. Der Trogquerschnitt 9 stellt den Einlaufquerschnitt 9 des Reduzierelementes 8 dar. Der Einlaufquerschnitt 9 verringert sich folglich um ca. 20 % bis 40 % entlang des Reduzierelementes 8, und zwar bis dort ausgangsseitig der Auslaufquerschnitt 10 beobachtet wird. Es gilt also im Beispielfall:

$$(0,6 \dots 0,8) \times \text{Einlaufquerschnitt } 9 = \text{Auslaufquerschnitt } 10.$$

Zu diesem Zweck ist das Reduzierelement 8 als an den Trog 3 angeschlossenes Ringelement ausgebildet. Der Trog 3 verfügt insgesamt über einen geschlossenen oder offenen Zylindermantel. Folgerichtig ist das Reduzierelement 8 als geschlossenes Ringelement bzw. Vollringelement entsprechend der rechten Darstellung in Fig. 3 und entsprechend den Fig. 1 und 2 ausgeführt. Alternativ hierzu kann das Reduzierelement 8 aber auch als geöffnetes Ringelement, beispielsweise Halbringelement, ausgelegt sein, wie dies in der linken Darstellung der Fig. 3 gezeigt ist und in Verbindung mit dem Ausführungsbeispiel nach Fig. 4 zum Einsatz kommt.

Das Reduzierelement 8 ist trogseitig mit dem an den endseitigen Trogquerschnitt 9 angepassten Einlaufquerschnitt 9 ausgebildet. Da der Trog 3 wie bereits beschrieben zylindrisch ausgelegt ist, verfügt er über einen durchgängig gleichen Trogquerschnitt 9, welcher dem fraglichen endseitigen Trogquerschnitt und folglich dem Einlaufquerschnitt 9 des Reduzierelementes 8 entspricht. Auslaufseitig weist das Reduzierelement 8 demgegenüber den Auslaufquerschnitt 10 auf, welcher gegenüber dem Einlaufquerschnitt 9 verringert ist.

Im Detail verfügt das Reduzierelement 8 über eine axiale Länge L, welche maximal die Hälfte des Trogdurchmessers D beträgt. Entsprechend dem Ausführungsbeispiel gilt, dass die axiale Länge L des Reduzierelementes 8 in etwa das 0,1- bis 0,3-fache des Trogdurchmessers D beträgt, nach dem Ausführungsbeispiel von seiner Länge her dem 0,2-fachen des Trogdurchmessers D entspricht. Es gilt also im Regelfall:

$$L = 0,1 \dots 0,3 \times D.$$

Da der Trog 3, wie bereits erläutert, zylindrisch ausgeführt ist, verfügt das Reduzierelement 8 typischerweise über eine konische Gestalt. Diese konische Gestalt erkennt man am besten bei einer Betrachtung der Fig. 3 und 4. Tatsächlich korrespondiert ein Konuswinkel $\beta$ von ca. 10° bis 40° zu dem konisch ausgebildeten Reduzierelement 8. Im Beispielfall beträgt der Konuswinkel $\beta$ ca. 20° und kann insbesondere im Bereich zwischen ca. 10° und 30° angesiedelt sein.

Anhand der Fig. 3 erkennt man darüber hinaus, dass das Reduzierelement 8 üblicherweise mehrteilig aufgebaut ist und sich aus einzelnen Reduzierelementbestandteilen 8a, 8b zusammensetzt. Tatsächlich greift das Ausführungsbeispiel auf zwei jeweils konische Halbringschalen zurück, die zusammengenommen das konische Reduzierelement 8 bzw. das auf diese Weise geschlossene Ringelement entsprechend der Darstellung nach Fig. 3 formen. Auf diese Weise kann auch mit nur einem Reduzierelementbestandteil 8a gearbeitet werden, wie dies im linken Teil der Fig. 3 und in der Fig. 4 dargestellt ist.

Das Reduzierelement 8 ist mit wenigstens einem Anschlussflansch 11 ausgerüstet. Über diesen Anschlussflansch 11 wird das Reduzierelement 8 beispielsweise lösbar mit dem Trog 3 an seinem auslaufseitigen Ende gekoppelt. Dazu wird der Flansch 11 mit dem Trog 3 über nicht dargestellte Befestigungsmittel wie beispielsweise Schrauben verbunden. Selbstverständlich liegt auch eine dauerhafte und nicht lösbare Verbindung zwischen dem Trog 3 und dem Reduzierelement 8 im Rahmen der Erfindung.

Üblicherweise arbeitet man jedoch mit einem abnehmbaren Reduzierelement 8, um für Wartungszwecke oder beispielsweise Reparaturen das Reduzierelement 8 entfernen zu können und im Anschluss hieran den Schneckenkörper 4 auszubauen sowie wieder einbauen zu können. Neben dem bereits genannten trogseitigen Anschlussflansch 11 kann das Reduzierelement 8 auch über einen weiteren trogabseitigen Anschlussflansch 12 verfügen. Mit Hilfe dieses trogabseitigen Anschlussflansches 12 lässt sich das Reduzierelement 8 bzw. der an dieser Stelle realisierte konische Voll- oder Halbring an einer Tragkonsole 13 ergänzend befestigen, die in der Fig. 4 beispielhaft angedeutet und dargestellt ist. Mit Hilfe dieser Tragkonsole 13 wird die dargestellte Wasserkraftanlage bzw. deren Trog 3 an ihrem unterwasserseitigen Ende alternativ oder zusätzlich zu der Basis 7 gemäß Fig. 2 gehalten und gelagert. In diesem Fall mag das Reduzierelement 8 mit seinem zusätzlichen trogabseitigen Anschlussflansch 12 ergänzend an die dortige Tragkonsole 13 angeschlossen werden. Das ist allerdings nur beispielhaft und nicht zwingend zu verstehen.

Anhand der Darstellung nach Fig. 2 erkennt man, dass das Reduzierelement 8 bzw. der an dieser Stelle vorgesehene Voll- oder Halbring ganz oder teilweise unterhalb des zugehörigen Unterwasserspiegels 2 angeordnet ist. Dadurch werden die Strömungsverhältnisse wie beschrieben besonders vorteilhaft beeinflusst. Außerdem ist das Reduzierelement 8 aus Blech und insbesondere Stahlblech gefertigt, so dass sich die gewünschte Form des konischen Voll- oder Halbringes unschwer durch übliche Bearbeitungsgänge, wie beispielsweise einen Walzvorgang oder Rollvorgang, herstellen lässt.

**Patentansprüche**

1. Wasserkraftanlage zum Erzeugen elektrischer Energie durch Umwandlung von Strömungsenergie eines strömenden Gewässers, mit wenigstens einer in einem Trog (3) aufgenommenen Rotoreinheit (4), und mit einem von der Rotoreinheit (4) angetriebenen Generator (5), **dadurch gekennzeichnet, dass** der Trog (3) an seinem auslaufseitigen Ende ein Reduzierelement (8) zur Verringerung des Ausströmquerschnittes aufweist.

2. Wasserkraftanlage nach Anspruch 1, **dadurch gekennzeichnet, dass** das Reduzierelement (8) als an den Trog (3) angeschlossenes Ringelement ausgebildet ist.

3. Wasserkraftanlage nach Anspruch 1 oder 2, **dadurch gekennzeichnet, dass** das Reduzierelement (8) als geschlossenes oder geöffnetes Ringelement, beispielsweise Vollringelement, Halbringelement, Dreiviertelringelement etc. ausgebildet ist.

4. Wasserkraftanlage nach einem der Ansprüche 1 bis 3, **dadurch gekennzeichnet, dass** das Reduzierelement (8) und der Trog (3) eine übereinstimmende Querschnittsform, beispielsweise jeweils kreisförmig, aufweisen.

5. Wasserkraftanlage nach einem der Ansprüche 1 bis 4, **dadurch gekennzeichnet, dass** das Reduzierelement (8) trogseitig einen an den endseitigen Trogquerschnitt (9) angepassten Einlaufquerschnitt (9) und auslaufseitig einen gegenüber dem Einlaufquerschnitt (9) verringerten Auslaufquerschnitt (10) aufweist.

6. Wasserkraftanlage nach Anspruch 5, **dadurch gekennzeichnet, dass** der Auslaufquerschnitt (10) des Reduzierelementes (8) in etwa 10 % bis 50 %, insbesondere 20 % bis 40 %, kleiner als der Einlaufquerschnitt (9) ausgebildet ist.

7. Wasserkraftanlage nach einem der Ansprüche 1 bis 6, **dadurch gekennzeichnet, dass** das Reduzierelement (8) eine axiale Länge (L) aufweist, welche maximal das 0,5-fache, insbesondere das 0,1- bis 0,3-fache, eines Trogdurchmesser (D) beträgt.

8. Wasserkraftanlage nach einem der Ansprüche 1 bis 7, **dadurch gekennzeichnet, dass** der Trog (3) zylindrisch und das Reduzierelement (8) konisch ausgebildet sind.

9. Wasserkraftanlage nach einem der Ansprüche 1 bis 8, **dadurch gekennzeichnet, dass** das Reduzierelement (8) mehrteilig aus einzelnen Reduzierelementbestandteilen (8a,. 8b) zusammengesetzt ist.

10. Wasserkraftanlage nach einem der Ansprüche 1 bis 9, **dadurch gekennzeichnet, dass** das Reduzierelement (8) mit wenigstens einem Anschlussflansch (11, 12) ausgerüstet ist.

11. Wasserkraftanlage nach einem der Ansprüche 1 bis 10, **dadurch gekennzeichnet, dass** das Reduzierelement (8) im Bereich einer Tragkonsole (13) angeordnet ist.

12. Wasserkraftanlage nach einem der Ansprüche 1 bis 11, **dadurch gekennzeichnet, dass** der Trog (3) unter einen bestimmten Aufstellwinkel (a) zwischen einem Oberwasserspiegel (1) und einem Unterwasserspiegel (2) eines strömenden Gewässers gelagert ist.

13. Wasserkraftanlage nach Anspruch 12, **dadurch gekennzeichnet, dass** der Trog (3) unter Einstellung eines variierenden Aufstellwinkels (α) schwenkbar zwischen dem Oberwasserspiegel (1) und dem Unterwasserspiegel (2) gelagert ist.

14. Wasserkraftanlage nach Anspruch 12 oder 13, **dadurch gekennzeichnet, dass** das Reduzierelement (8) ganz oder teilweise unterhalb des Unterwasserspiegels (2) angeordnet ist.

15. Wasserkraftanlage nach einem der Ansprüche 1 bis 14, **dadurch gekennzeichnet, dass** das Reduzierelement (8) aus Blech, insbesondere Stahlblech, hergestellt ist.

## _Fig.1_

Fig.2

Fig.3

Fig.4

Europäisches Patentamt
European Patent Office
Office européen des brevets

**EUROPÄISCHER RECHERCHENBERICHT**

Nummer der Anmeldung

EP 10 19 3701

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2010 004056 U1 (RITZ ATRO GMBH [DE]) 10. Juni 2010 (2010-06-10) | 1-5, 8-12,14, 15 | INV. F03B13/06 F03B13/08 |
| Y | * Absatz [0007] * * Abbildung 1 * ----- | 13 | F03B17/06 F03B11/02 |
| X | WO 2005/035977 A1 (URSUA ISIDRO U [PH]) 21. April 2005 (2005-04-21) * Seite 19, Zeile 17 - Seite 20, Zeile 6 * ----- | 1 | |
| E | WO 2010/149983 A2 (DESIGN TECHNOLOGY & INNOVATION LTD [GB]; TONKIN MARK CHRISTOPHER [GB]) 29. Dezember 2010 (2010-12-29) * Seite 3, Zeile 6 - Zeile 23 * * Seite 4, Zeile 23 * * Abbildung 2 * ----- | 1 | |
| Y,D | EP 1 930 597 A2 (WITTEVEEN & BOS RAADGEVENDE IN [NL]) 11. Juni 2008 (2008-06-11) * Zusammenfassung * * Spalte 3, Zeile 4 - Zeile 7 * * Abbildung 2 * ----- | 13 | RECHERCHIERTE SACHGEBIETE (IPC) F03B |
| A,D | DE 41 39 134 A1 (RADLIK KARL AUGUST [DE]) 11. Juni 1992 (1992-06-11) * Zusammenfassung * * Spalte 2, Zeile 53 - Zeile 61 * * Abbildungen 3,4 * ----- | 1-15 | |
| A | WO 2009/020386 A1 (MANSHANDEN GERARDUS AUGUSTINUS [NL]) 12. Februar 2009 (2009-02-12) * Zusammenfassung * * Abbildungen 1,2,4 * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 21. April 2011 | Westermayer, Philipp |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 19 3701

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-2011

| Im Recherchenbericht angeführtes Patentdokument | Datum der Veröffentlichung | Mitglied(er) der Patentfamilie | | Datum der Veröffentlichung |
|---|---|---|---|---|
| DE 202010004056 U1 | 10-06-2010 | KEINE | | |
| WO 2005035977 A1 | 21-04-2005 | AU | 2004280216 A1 | 21-04-2005 |
| | | CN | 1867768 A | 22-11-2006 |
| | | EP | 1690003 A1 | 16-08-2006 |
| | | US | 2007020097 A1 | 25-01-2007 |
| WO 2010149983 A2 | 29-12-2010 | KEINE | | |
| EP 1930597 A2 | 11-06-2008 | BE | 1017646 A3 | 03-03-2009 |
| DE 4139134 A1 | 11-06-1992 | KEINE | | |
| WO 2009020386 A1 | 12-02-2009 | EP | 2174013 A1 | 14-04-2010 |
| | | NL | 1034232 C2 | 09-02-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1930597 A2
- DE 4139134 A2
- US 4868408 A
- EP 1930597 A
- DE 4139134 A1